# EUROPEAN PATENT APPLICATION

(11) **EP 2 413 647 A2**
(43) Date of publication of application: **01.02.2012**
(21) Application number: 11174860.4
(22) Date of filing: 21.07.2011
(51) Int. Cl.: H04W 60/04

(54) **Roaming functionality in a wireless communication network**

(30) Priority: 27.07.2010 EP 10007815
(71) Applicant: Siemens Aktiengesellschaft, 80333 Munich (DE)
(72) Inventor: Ziller, Andreas, 81827 München (DE); Lampe, Mattias, 38304 Wolfenbuettel (DE)

(57) **Abstract**

The invention describes a method for operating a wireless communication network (NW) comprising a number of access points (AP1, ..., AP6) which are located along a track (TCK) or a road, and at least one client (TU) which is arranged on a vehicle or a train (TR) and which is adapted to transmit and receive data from one of the access points (AP1, ..., AP6) at a particular time during a movement along the track (TCK) or road. The at least one client (TU) determines the next access point (AP1, ..., AP6) to connect next in dependence of one or more of the access points (AP1, ..., AP6) it has already been connected to.

## Description

The invention relates to a method for operating a wireless communication network comprising a number of access points which are located along a track or a road and at least one client, which is arranged on a vehicle or a train and is adapted to transmit or receive data from one of the access points at a particular time during a movement along the track or a road.

Wireless communication networks provide connectivity to a multitude of different applications. The base design of wireless communication networks is targeting home and office applications. Wireless communication networks may also be used as trackside infrastructure for communication based train control, for example in subway systems. For security reasons, any problem with the connectivity of a train related client to an access point of the wireless communication network leads to an emergency response, e.g. a brake of the trains.

Wireless communication networks for the applications described may be based on the WLAN standard IEEE 802.11. In the following description, the functionality and problems which may arise in wireless communication network is given by referring to a network being based on the WLAN standard 802.11 only by way of example. However, it is to be understood, that this procedure is chosen by way of example to ease understanding. The same problems may occur in wireless communication networks being based on other communication standards in a comparable way. Hence, any other standard of wireless communication may be used, either.

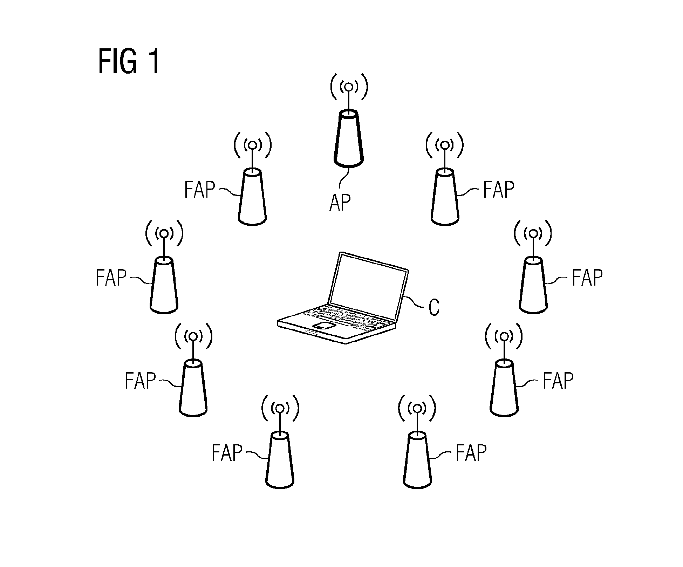

The problem of utilizing WLAN standard 802.11 as a communication platform in general and for trackside infrastructures in particular is that the basic protocol mechanisms like channel access or user management, are very prone to misuse by attackers. For example, for an attacker it is possible to pretend the presence of a non-existing access point (or a number of non-existent access points) by flooding beacons, which advertise/simulate access points. This kind of attack is referred as "fake access point attack". Fig. 1 illustrates this situation in a schematic view. AP denotes a real access point of a wireless communication network. Access points denoted with FAP are fake access points, which are generated by a computer C. An attacker using this computer C may be a passenger of a train travelling along a track. The goal of the attack is that a nearby client unit of the train (train unit), e.g. a computer for controlling and monitoring the train, is fooled in that way that the train unit chooses a non-existent access point FAP to connect. This implies a denial of service to the client of the train as it cannot perform its intended data exchange with the server of the train control system, i.e. access point AP in Fig. 1.

The problem of the WLAN protocol, which is exploited by that attack, is that a WLAN client cannot decide in advance whether a seen access point is really existent or not. Access points are typically announce themselves with so called beacon messages, which are not protected and which can therefore easily be forged. The client overhearing a beacon message relies that this message is authentic. Furthermore, the decision algorithm when and to which access point to roam is very simple and it is very prone to this kind of attack. It is realised by a simple state machine which has the drawback, that the situation where a beacon messages announces a non-existent access point, is not addressed. Once the client has chosen an access point for connection, it continues to connect as long as it still receives beacon messages. Even if the client would change the access point for connection, the fake access point attack would be still successful because attackers typically emit a lot of beacon frames of arbitrary non-existent access points. Choosing a real access point for connection becomes very unlikely for a client.

As mentioned above communication based train control systems are very prone to fake access point attacks. Within a train system, such as a subway or a train system for commuting, trackside access points, i.e. access points which are located along the tracks, provide wireless coverage within the system. Trains are driving along the track and are equipped with standard WLAN radio adapters which are able to roam between the access points. WLAN radio adapters represent the clients within the wireless communication network. Attackers can figure out which access points belong to the system as this is unprotected plain information which can be easily sniffed with standard WLAN equipment.

The antennas of the access points and the clients within the train are typically directed antennas pointing in the direction of the track. Therefore, the transmission between these components can be overheard from outside and from inside the train. Due to the characteristics of radio communication it is always possible that a node (access point or client) which can receive data from another node can also transmit to that node. This is also possible from inside the train, i.e. attacks from inside become possible. Although the main lobes of directed antennas of the train point away from the cabins of the train, the attenuated antenna backlobes are also covering the cabin.

An attack targeting the wireless communication network of the train system can be very successful as the system is very time constrained. An attacker succeeding in interrupting the communication just for a few seconds is able to achieve an emergency response of the system because of security reasons.

Typically, the choice of the access point to which a client wants to connect next is based on metrics like RSSI (Received Signal Strength Indication) which address signal quality and expected throughput. Ongoing research is currently focused on the expected service quality as basis for roaming decisions and assumes that security is achieved once a client is connected. With the security mechanisms presently used in WLAN protocols fake access attacks cannot be avoided. The reason for that is that they do not change the access point to connect as long as they receive beacon messages from a non-existent access point.

In order to complicate fake access point attacks current nodes avoid using of access point MAC addresses (MAC = Media Access Control) which are not used in the communication system. In case MAC addresses are used it is known to provide them on a whitelist, so that only the access points which are on the whitelist are permitted for connection. However, the number of allowed access points in a train system can be very high. On the one hand, this complicates administration of the system. On the other hand, an attacker can even use allowed MAC addresses from the whitelist achieving successful fake access point attack. The reason for that is, that it is not feasible to keep the whitelist confidential as the information which access points belong to a system can easily be overheard, e.g. by a network sniffer, which is in the train travelling along a track.

It is therefore an object of the present invention to provide a method for operating a wireless communication network, which provides an enhanced security against fake access point attacks.

This object is solved by a method according to the features of claim 1 and a wireless communication network according to the features of claim 8. Preferred embodiments are set out in the dependent claims.

The invention suggests a method for operating a wireless communication network comprising a number of access points, which are located along a track or a road and at least one client, which is arranged on a vehicle or a train and which is adapted to transmit and receive data from one of the access points at a particular time during a movement of the train along a track or a road. The at least one client determines the next access point to connect next in dependence of one or more of the access points it has already been connected to.

The invention provides a mechanism which allows the estimation of the authenticity of access points and which controls the roaming functionality of a client. It decides when and to which access point to roam in dependence of the authenticity of the advertised access points. Therefore, it relies on pro-active knowledge and the characteristics of the network technology. The mechanism has the advantage that it is transparent for the underlying network technology. So it may be used for wireless communication networks being based on WLAN standard 802.11 or any other wireless communication technology. A further advantage is the possibility to implement the mechanism without the necessity to modify any hardware driver of the access points or the client.

As a result, the method according to the invention provides a secure and simple counter measure against a fake access point attack. An attacker cannot achieve that the client connects to an access point, which existence can be excluded. An attacker can only advertise for those access points which are likely to be close to the client because they would be chosen according to one or more of the access points it has already been connected to. However, pretending the existence of actual existing access points is not an attack as the real access point would be able to answer on a provoked connection attempt. In that case, the connection between the client and the real access would be established.

According to a preferred embodiment the at least one client determines the next access point to connect next in dependence which of the access points along the track or road are effectively available for transmitting and receiving data with the client. It is clear for a skilled person that a next access point to which the client will connect next will always be in direction of travel of the train or the vehicle along its track or road. By determining those access points which are potential next access points the probability for an attacker to be successful with a fake access point attack will be reduced.

According to a further preferred embodiment the at least one client maintains a list of identifiers of all access points along the track or road together with an information about the sequence of the access points along the track or the road. An identifier of an access point may be a MAC-address. However, the identifier could be chosen different from a MAC-address. The information about the access points with their identifier and its corresponding sequence information may be a list which is in the order of the access points along the track or road. In this case the sequence information may be omitted because the sequence of the access points with their identifier itself within the list gives an indication which access points follows another access point.

Alternatively, the at least one client receives an information about the identifier of the next access point to connect next or a number of next access points being available for transmitting and receiving data, one of them is to connect next, from the access point it is connected to, currently. In this alternative embodiment the former mentioned list of identifiers of all access points is not necessary since the clients receives the information about which access points are potentially next access points within a message from the access point it is connected to, currently.

According to a further preferred embodiment, the identifier of the next access point has to follow the identifier of the current access point the client is connected to directly in sequence in the list of identifiers of the access points. According to this embodiment it is only allowed that the access points are connected in their sequence of arrangement along the track or road. This embodiment reduces the probability of a successful fake access point attack to a minimum.

Alternatively the identifier of the next access point may be located a pre-determined number of steps in the list after or before the access point to which the client was connected to last. However, the identifier of the next access point is in front of the driving direction of the train or vehicle. This embodiment allows more flexibility with regard to an association between the client and the access points along the track or road. This might be especially helpful if the track or road comprises lots of curves where the signal transmission conditions may be very difficultor in case of failure of individual applications. This embodiment is addressed to the case where the client is associated first to a next access point, which is, e.g. three steps in front of the access point it is connected to, presently. While travelling along the track or road the best connection now might be to an access point which is in between the train or the vehicle and the access point to which the client is connected to currently, wherein the latter is in front, i.e. in driving direction of the train along the track, too.

According to a further preferred embodiment the client authenticates with all access points being available for transmitting and receiving data and associates to the access points with response to an authentication procedure of a respective access point with an appropriate protocol message, wherein, if after a timeout this respective access point is not responding, the client starts an association procedure to a further possible next access point. This mechanism ensures that in case of an attack trying to interrupt the communication for a while, a connection to one of the amount of possible access points will be made. Therefore, the chance of an attacker to be successful in interrupting the communication for triggering an emergency response of the vehicle system can be reduced.

Additionally, the invention provides a wireless communication network comprising a number of access points which are located along a track or a road and at least one client which is arranged on a vehicle or a train, and which is adapted to transmit and receive data from one of the access points in a particular time during a movement along the track or road, wherein the at least one client is further adapted to determine the next access point to connect next in dependence of one or more of the access points, it has already been connected to. The wireless communication network according to the invention has the same advantages as set out above in conjunction with the description of the method according to the invention.

The invention will be explained hereafter in more detail together with the accompanying figures.
- Fig. 1: shows a schematic view of a number of access points, a part of them being fake access points created by a computer.
- Fig. 2: shows a schematic diagram of a wireless communication network for a vehicle system according to the invention.

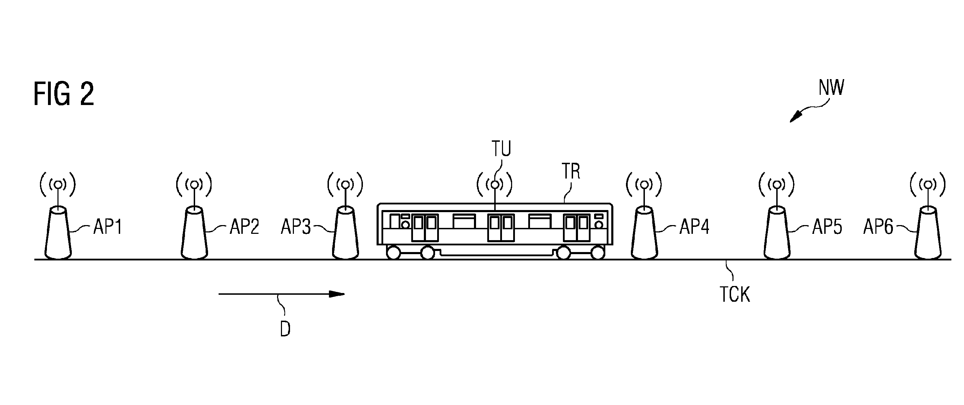

Fig. 2 illustrates a schematic diagram of a wireless communication network for providing a trackside communication infrastructure for a train system. However, it is to be understood that wireless communication network according to the invention may also be used in any other application, such as a road system, where a communication between vehicles and trackside or roadside access points will take place.

In Fig. 2 a section of a train system is illustrated. TCK represents the rails of a train system. The train itself is represented by one wagon depicted with TR. For communication purposes the train TR comprises a wireless radio adapter, which is called a train unit. In the present description the radio adapter together with additional computation means (not shown) is called a client TU. The client TU furthermore comprises antennas (not shown) which are typically mounted at the front and the end of the train. Typically, directed antennas are used. However, the transmission can be overheard from outside and even from inside a train, e.g. with the help of a laptop having an appropriate radio adapter.

The communication infrastructure of the train system furthermore consists of a number of access points AP1, AP2, AP3, AP4, AP5, AP6. The access points AP1, ..., AP6 are located along the track TCK. The distance between two adjacent access points AP1 - AP2; AP2 - AP3; AP3 - AP4; AP4 - AP5; AP5 - AP6 may be chosen according to the local conditions. Hence, the distance between two adjacent access points may vary. As it is clear to a skilled person the access points AP1, ..., AP6 are connected to a central processor (not shown) which may be used for controlling the train system, such as traffic lights or railway switches.

The wireless communication network consisting of the access points AP1, ..., AP6, the client TU and further computing devices may be based on the WLAN standard 802.11. However, any other communication technology may be chosen.

For controlling the train TR travelling along the track TCK data are exchanged between the client TU and one of the access points AP1, ..., AP6 at a particular time. For the further description it is assumed that the train is travelling from the left side to the right side as indicated by arrow D. Furthermore, it is assumed that currently a data connection between access point AP3 and the client TU is established.

The client TU determines the access point to connect next (in direction of movement of train TR) in dependence of the access points the client TU has already been connected to (here: at least access point AP3 it is connected to currently) and preferably in dependence of the access points which are available. It is assumed, that due to the local conditions only access point AP4 in front of the train TR along the track TCK is available for exchanging data.

To complicate attacks using the principle of fake access points, e.g. with the help of a computer in the train TR (simulating one or more fake access points) the client TU maintains a list of identifiers of all access points AP1, ..., AP6 along the track TCK together with an information about the sequence of the access points along the track. In principle any information can be used as a unique identifier of the access points AP1, ..., AP6. However, the easiest way is to use MAC-addresses as identifiers. In the list the MAC-addresses of the access points AP1, ..., AP6 can be in an order corresponding to the arrangement of the access points AP1, ..., AP6 along the track TCK. However, the MAC-addresses may be arranged in any order as long as there is an additional information about the sequence of the access points AP1, ..., AP6 along the track TCK.

The client TU now connects to access point AP4 only, if its identifier, i.e. MAC-address, can be read out of a beacon message which is sent by the access point AP4. Furthermore, it is determined, whether the read-out identifier of the beacon message of access point AP4 follows the identifier of the access point AP3 the client TU is connected to, currently. A maximum security is provided if the identifier of access point AP4 has to follow the identifier of access point AP3 directly in the list maintained by the client TU.

In a further variant of this mechanism, it is allowed that the access point to which the client TU wants to connect, is located a certain number of steps on the list after or before the access points to which the client TU was connected last. For example, access points AP4, AP5 and AP6 are potentially next access points. Depending on the local conditions it may occur, that the client TU first connects to the access point AP6 and after that to the access point AP5 while the train is travelling along the track TCK.

If it is possible that the client TU can connect to a number of access points as described, the client has this information available in an internal memory (for example within the list) or receives this information from the access point it is connected to, currently (here: access point AP3). The number of access points which are potentially available as next access points may vary according to the local conditions or according to a predetermined rule.

In case that an attacker being in the train TR is available to simulate a fake access point having the same identifier like access point AP4 it may occur a data collision during an association and authentication process for establishing a data communication to the client TU. To avoid an interruption in the communication over a predetermined time limit the client TU authenticates with all potential available access points, in the example AP4, AP5 and AP6, which are likely to be real. Since the signal strength of access point AP4 is assumed to be due to the closest distance to the client TU the highest compared to the signal strength of access points AP5 and AP6, the client TU associates first to access points AP4, which answers the authentication with an appropriate WLAN protocol message. Since a data collision may occur because of the fake access points simulating access point AP4, authentication may fail. Therefore, after a timeout of not answering of access point AP4, the client TU tries to associate to the next access point (here: AP5) which is present and supposed to be authentic and so on. With this mechanism an interruption of communication can be avoided. The mechanism described allows the estimation of the authenticity of access points. Furthermore, it allows controlling the roaming functionality of a client. The mechanism decides when and which access point to roam in dependence of the authenticity of advertised access points. Therefore, the mechanism relies on pro-active knowledge and the characteristic of the network typology. The mechanism is transparent for the underlying technology. It can be implemented without the necessity to modify any hardware in the train unit or the access points along the track.

The mechanism is a reliable counter measure against fake access point attacks. The attacker cannot achieve that the client connects to an access point that is not currently within range.

## Claims

1. A method for operating a wireless communication network (NW) comprising a number of access points (AP1, ..., AP6) which are located along a track (TCK) or a road and at least one client (TU) which is arranged on a vehicle or a train (TR) and which is adapted to transmit and receive data from one of the access points (AP1, ..., AP6) at a particular time during a movement along the track (TCK) or road,
wherein the at least one client (TU) determines the next access point (AP1, ..., AP6) to connect next in dependence of one or more of the access points (AP1, ..., AP6) it has already been connected to.

2. The method according to claim 1, wherein the at least one client (TU) determines the next access point (AP1, ..., AP6) to connect next in dependence of which of the access points along the track (TCK) or road are effectively available for transmitting and receiving data with the client (TU).

3. The method according to claim 1 or 2, wherein the at least one client (TU) maintains a list of identifiers of all access points (AP1, ..., AP6) along the track (TCK) or road together with an information about the sequence of the access points (AP1, ..., AP6) along the track (TCK) or the road.

4. The method according to claim 1 or 2, wherein the at least one client (TU) receives an information about the identifier of the next access point (AP1, ..., AP6) to connect next or a number of next access points (AP1, ..., AP6) being available for transmitting and receiving data, one of them is to connect next, from the access point (AP1, ..., AP6) it is connected to, currently.

5. The method according to claim 3 or 4, wherein the identifier of the next access point (AP1, ..., AP6) has to follow the identifier of the current access point (AP1, ..., AP6) the client (TU) is connected to directly in sequence in the list of identifiers of the access points (AP1, ..., AP6).

6. The method according to claim 3 or 4, wherein the identifier of the next access point (AP1, ..., AP6) may be located a predeterminded number of steps in the list after or before the access point (AP1, ..., AP6) to which the client (TU) was connected to last.

7. The method according to one of the preceding claims, wherein the client (TU) authenticates with all access points (AP1, ..., AP6) being available for transmitting and receiving data and associates to the access point (AP1, ..., AP6) which responds to an authentication procedure of a respective access point (AP1, ..., AP6) with an appropriate protocol message, wherein, if after a timeout this respective access point (AP1, ..., AP6) is not responding, the client starts an association procedure to a further possible next access point (AP1, ..., AP6).

8. A wireless communication network (NW) comprising a number of access points (AP1, ..., AP6) which are located along a track (TCK) or a road and at least one client (TU) which is arranged on a vehicle or a train (TR) and is adapted to transmit and receive data from one of the access points (AP1, ..., AP6) at a particular time during a movement along the track (TCK) or road,
wherein the at least one client (TU) is further adapted to determine the next access point (AP1, ..., AP6) to connect next in dependence of one or more of the access points (AP1, ..., AP6) it has already been connected to.

9. The wireless communication network (NW) according to claim 8, wherein the communication is based on WLAN standard 802.11.
